Europäisches Patentamt

European Patent Office

Office européen des brevets

(19)

(11) Numéro de publication : **0 440 570 A1**

## (12) DEMANDE DE BREVET EUROPEEN

(21) Numéro de dépôt : 91420030.8

(22) Date de dépôt : 31.01.91

(51) Int. Cl.⁵ : **C04B 35/00, B22F 1/00**

(30) Priorité : 02.02.90 FR 9001775

(43) Date de publication de la demande :
07.08.91 Bulletin 91/32

(84) Etats contractants désignés :
**AT BE CH DE DK ES GB GR IT LI LU NL SE**

(71) Demandeur : **PECHINEY RECHERCHE
(Groupement d'Intérêt Economique régi par
l'Ordonnance du 23 Septembre 1967)
Immeuble Balzac
10, place des Vosges
F-92400 Courbevoie, La Défense 5 (FR)**

(72) Inventeur : **Gugliermotte, Francis
326, rue Igor Stravinski, La Gachettière
F-38340 Voreppe (FR)**

(74) Mandataire : **Séraphin, Léon et al
PECHINEY 28, rue de Bonnel
F-69433 Lyon Cedex 03 (FR)**

(54) **Procédé de frittage de poudres de métaux ou d'alliages métalliques de céramiques ou de cermets.**

(57)    L'invention concerne un procédé de frittage de poudres métalliques, céramiques ou cermets à l'aide d'un agent de densification type polymère contenant les éléments B,P et/ou N, tels que les polyphosphazanes, les polyphosphazènes ou le diméthylphosphinoborine.
Ces agents permettent de fritter à des températures allant jusqu'à 10% en-dessous de la température habituelle de frittage, tout en obtenant une densité supérieure ou égale à 96% de la densité théorique.

EP 0 440 570 A1

## PROCEDE DE FRITTAGE DE POUDRES DE METAUX OU D'ALLIAGES METALLIQUES, DE CERAMIQUES OU DE CERMETS

L'invention concerne un procédé de frittage de poudres métalliques, céramiques ou cermets à l'aide d'un agent de densification de type polymère organique contenant les éléments B, P et/ou N.

Les procédés connus de frittage comportent habituellement les opérations suivantes :

obtention des poudres initiales

ajout de liant(s) et éventuellement de lubrifiant(s)

compression ou extrusion pour former le corps "à vert"

frittage en 1 ou 2 étape(s) : (préfrittage et frittage à plus haute température).

Pour les céramiques telles $Al_2O_3$, SiC, $TiO_2$, $ZrO_2$, les températures de frittage sont élevées, en général moins de 100°C en dessous de la température de fusion.

Cela implique des fours à hautes températures, chers et compliqués, dont la maintenance est coûteuse et grands consommateurs d'énergie.

On connaît par les demandes FR A- 2 249 052, ou FR A- 2 500 438, le frittage de SiC avec addition d'un composé du B et un additif carboné, à une température de l'ordre de 1900-2100°C pour obtenir un produit ayant une densité de 95% de la densité théorique.

Les brevets GB-B-1463177 ou US-A-4595665 par exemple décrivent des méthodes de frittage de l'alumine α avec diverses additions minérales (oxydes).

Le problème posé concerne donc le frittage à relativement basse température (jusqu'à 10% en dessous de la température habituelle, exprimée en °C) de métaux, alliages métalliques, céramiques ou cermets par ajout d'un polymère organique contenant P,B et/ou N, tout en obtenant un produit de haute densité d (d >96% de la densité théorique.

L'invention comporte donc les opérations suivantes

a) obtention des poudres initiales

b) ajout d'un (ou de) liant(s) et éventuellement de lubrifiant(s)

c) mélange ou atomisation

d) mise en forme (par compression, extrusion ou injection)

e) séchage éventuel

f) frittage en 1 ou (ou 2) étape(s)

caractérisé en ce que

l'ajout est constitué par un (ou des) polymère(s) organiques contenant B,P, et/ou N.

Comme cela est connu, la granulométrie et/ou la morphologie des poudres est choisie en fonction des applications recherchées.

Par exemple, pour les composants électroniques ($Al_2O_3$, $ZrO_2$, $TiO_3Ba$), les poudres sont submicroniques, et pour les applications types fourreaux de four en $Al_2O_3$, la grosseur maximale peut aller jusqu'à 3 mm.

Par polymère organique contenant P,B,N, on entend un composé organique dont la chaîne principale est formée de liaisons P-N ou P-B tels que les polyphosphazènes, les polyphosphazanes et les polymères obtenus à partir de diméthylphosphinoborine.

Le mélange est obtenu soit par voie sèche, soit par voie humide, par tous moyens connus (malaxage mécanique, broyage, etc...) ou atomisation d'une solution ou d'une suspension.

La mise en forme se fait également de façon classique par pressage à froid, extrusion, injection, engobage, coulée de barbotine, etc... suivie d'un séchage éventuel.

Le frittage se fait généralement sous atmosphère neutre ou réductrice ($H_2$, $N_2$, Ar, vide ou mélange de gaz) à une température et une durée appropriées, allant jusqu'à 10% au-dessous à la température habituelle de frittage.

Le refroidissement a lieu sous atmosphère, en refroidissement naturel, dans le four.

L'invention sera mieux comprise à l'aide des exemples suivants :

### EXEMPLE 1

On utilise comme matière première une poudre de carbure de silicium de granulométrie inférieure au micron ayant les caractéristiques suivantes :

|  | en ppm |
| --- | --- |
| Oxygène | 500 |
| Azote | 100 |
| Carbone libre | 7000 |

Fer   120
Bore   3000

Taille moyenne des particules, en micron 0,56

On prépare un mélange comportant :

100 g  de carbure de silicium

dispersé dans un mélange constitué de :

100 g   d'alcool éthylique

et de 2 g  de l'un ou l'autre des phosphazanes $(POCl_3 NPO)_2$

     ou $(POCl_3 NPO)_6$

Les solvants alcool éthylique (ou toluène) doivent être exempts d'eau ; le mélange doit se faire à l'abri de l'humidité.

Le mélange a été homogénéisé durant 4 heures dans un broyeur à billes.

La barbotine est ensuite tamisée sur une toile à maille 100 µm.

Après séchage pour évaporation des solvants, elle est de nouveau tamisée sur toile à mailles de 100 µm.

La poudre est ensuite comprimée sous forme de plaquettes de 3 cm x 1 cm x 0,2 cm sous une pression de 180 MPa qui atteignent 55% de la masse volumique théorique.

Après frittage sous azote à une pression de $66,65.10^2 Pa$ (50 mm de Hg) à 1990°C, selon le programme de montée en température suivant :

50°C/h jusqu'à 250°C

30°C/h de 250 à 400°C

200°C/h de 500 à 1500°C

  palier de 2 heures à cette dernière température

100°C/h de 1500 à 1990°C

  palier 30 minutes à cette dernière température

  puis un refroidissement naturel jusqu'à température ambiante,

la pièce a subi un retrait de 19% par rapport à la plaquette en vert, ce qui correspond à une densité finale de 96% de la densité théorique.

## EXEMPLE 2

Utilisation d'une poudre de carbure de silicium analogue à celle de l'exemple 1, mais exempte de bore, et du même mode opératoire que pour l'essai N° 1, sauf que le liant est constitué par 2 g de polymère du trimère de diméthylphosphinoborine $((CH_3)_2 PBH)n$.

L'effet de densification est encore plus marqué puisque 98,6% de la densité théorique est obtenue avec un frittage à 1970°C.

## EXEMPLE 3

On utilise une poudre de CSi analogue à celle de l'exemple 1 et dans les mêmes conditions, sauf en ce qui concerne le solvant constitué de toluène et le liant constitué de 2 g de di(dichlorophosphoryl)-imide.

La densité finale obtenue est de 97% de la densité théorique.

L'un des avantages important de cette invention est que le frittage peut être effectué au-dessous de 2000°C ; on sait en effet, qu'au-delà de 2000°C, la technologie des fours est nettement différente et nécessite des investissements beaucoup plus importants pour une durée de vie relativement réduite des équipements.

## Revendications

1. Procédé de frittage de métaux, alliages, céramiques ou cermets comportant les opérations suivantes :

  a) obtention des poudres initiales

  b) ajout d'un (ou de) liant(s) et éventuellement de lubrifiant(s)

  c) mélange ou atomisation

  d) mise en forme par compression, extrusion ou injection

  e) séchage éventuel

  f) frittage en une (ou 2) étape(s)

 caractérisé en ce que :

  l'ajout est constitué par un (ou des) polymère(s) organiques contenant les éléments B,P et/ou N.

2. Procédé selon la revendication 1 caractérisé en ce que le polymère organique contient des liaisons P-N et/ou P-B.

3. Procédé selon la revendication 2, caractérisé en ce que le polymère appartient au groupe formé par les polyphosphazanes, les polyphosphazènes ou les polymères obtenus à partir de diméthylphosphinoborine.

4. Procédé selon l'une des revendications 1 ou 3, caractérisé en ce que la poudre initiale est du SiC.

Office européen
des brevets

**RAPPORT DE RECHERCHE EUROPEENNE**

Numero de la demande

EP 91 42 0030

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 300 543 (NORDDEUTSCHE AFFINERIE) * Revendications 1-2,4 * | 1,4 | C 04 B 35/00 B 22 F 1/00 |
| Y | | 2,3 | |
| X | WPIL, FILE SUPPLIER, AN=82-31614E, Derwent Publications Ltd, Londres, GB; & JP-A-57 042 564 (ASAHI GLASS) 10-03-1982 * Abrégé * | 1,4 | |
| Y | IDEM | 2-3 | |
| Y | PATENT ABSTRACTS OF JAPAN, vol. 4, no. 71 (E-012), 24 mai 1980; & JP-A-55 039 661 (HITACHI MAXELL) 19-03-1980 * Abrégé * | 2-3 | |
| Y | PATENT ABSTRACTS OF JAPAN, vol. 4, no. 71 (E-012), 24 mai 1980; & JP-A-55 039 662 (HITACHI MAXELL) 19-03-1980 * Abrégé * | 2-3 | DOMAINES TECHNIQUES RECHERCHES (Int. Cl.5) |
| X | FR-A-2 387 197 (GEORG FISCHER AG) * Revendication 1 * | 1 | B 22 F C 04 B |
| A | EP-A-0 027 673 (PHILIPS) * Revendications 1-2 * | 1 | |
| A | WO-A-8 801 990 (MANCHEM LTLD) * Revendications 1,4-6 * | 1 | |
| A | PATENT ABSTRACTS OF JAPAN, vol. 7, no. 59 (M-199), 11 mars 1983; & JP-A-57 203 701 (NIPPON KAGAKU KOGYO) 14-12-1982 * Abrégé * | 1 | |

Le présent rapport a été établi pour toutes les revendications

| Lieu de la recherche | Date d'achèvement de la recherche | Examinateur |
|---|---|---|
| LA HAYE | 26-04-1991 | SCHRUERS H.J. |

EPO FORM 1503 03.82 (P0402)

5